# FASCICULE DE BREVET EUROPEEN

(11) **EP 0 687 886 B1**
(45) Date de publication et mention de la délivrance du brevet: **03.09.1997**
(21) Numéro de dépôt: 95401377.7
(22) Date de dépôt: 13.06.1995
(51) Int. Cl.: F41A 25/26, F16F 9/54, F16B 1/00

(54) **Système de fixation d'un lien élastique sur un berceau**
Vorrichtung zum Befestigen einer elastischen Verbindung auf einer Wiege
Device for fastening an elastic connection on a cradle

(30) Priorité: 17.06.1994 FR 9407476
(43) Date de publication de la demande: 20.12.1995
(73) Titulaire: GIAT INDUSTRIES, 78000 Versailles (FR)
(72) Inventeur: Balbo, Patrick, F-18000 Bourges (FR); Malassenet, Guy, F-18110 Pigny (FR); Grelat, Philippe, F-18000 Bourges (FR); Mandereau, Fabienne, F-18000 Bourges (FR)

(56) Documents cités:
- FR-A- 877 082
- GB-A- 466 655
- US-A- 1 948 497
- US-A- 2 352 233

## Description

La présente invention concerne un dispositif, notamment une partie d'arme d'artillerie, comprenant un berceau, un corps de lien élastique et une bride pour la fixation du corps au berceau.

Elle concerne également les armes d'artillerie comprenant un tel dispositif.

Sur de nombreuses armes d'artillerie, le berceau est relié au manchon de culasse par un ou plusieurs liens élastiques, frein ou récupérateur. Ceux-ci comprennent un corps solidaire du berceau et une tige coulissant dans le corps et fixée au manchon de culasse.

Le brevet FR-A-877 082 (base pour le préambule de la revendication 1) décrit une arme constituée d'un canon sur lequel est fixé un support, d'un berceau dans lequel coulisse le canon, d'un frein et d'un récupérateur dont les tiges sont liées au berceau et les cylindres au support mobile avec le canon. La liaison au support est réalisé par les brides moulées sur les cylindres et boulonnées sur les surfaces conjuguées du support. Dans ce document, les cylindres de lien ou de frein sont fixés sur une partie mobile.

Généralement, le corps est fixé au berceau au moyen d'une bride en forme de demi-coquille fixée au berceau par des liaisons vis-écrou. Le berceau et la bride présentent chacun une demi-portée cylindrique. Une fois la bride fixée, les deux demi-portées constituent un logement cylindrique épousant le contour cylindrique du corps. Deux épaulements bloquent le corps en translation parallèlement à son axe. La position de fixation du corps au berceau doit être précisément définie si bien qu'il est nécessaire d'usiner les demi-portées avec la bride fixée au berceau.

Lorsque le berceau comprend plusieurs liens élastiques, il résulte de cet agencement que chaque bride doit toujours occuper la même position, aucune permutation de bride n'étant possible. Or pour faciliter les opérations de montage et aussi diminuer le stock de pièces de rechange, il est préférable d'augmenter l'interchangeabilité des pièces entre elles et notamment des brides. De plus, la phase d'usinage précitée des deux demi-portées est relativement délicate et constitue une phase d'usinage supplémentaire.

Par conséquent, la présente invention propose un dispositif pour surmonter ces inconvénients, dans lequel la ou les brides peuvent être librement remplacées et permutées tout en assurant une très bonne fixation au berceau de chaque corps de lien élastique.

La présente invention vise donc un dispositif de fixation d'un lien élastique d'une artillerie comprenant notamment un berceau , un corps de lien élastique et une bride pour la fixation dudit corps au berceau, caractérisé en ce que le corps présente une partie partiellement cylindrique adaptée à être enfilée axialement dans une partie tubulaire de la bride, et en ce qu'il est constitué de premiers moyens de fixation de la bride sur le berceau comprenant des premières, deuxièmes et troisièmes surfaces de la bride et du berceau destinés à interdire toute translation de la bride par rapport au berceau (suivant trois directions orthogonales entre elles et par rapport à l'axe du berceau, et de deuxièmes moyens de fixation rigide du corps sur la bride.

Dans les dispositifs précités, le corps étant fixé au berceau au moyen de la fixation de la bride. Au contraire, dans la présente invention, d'une part le corps est fixé à la bride et d'autre part la bride est fixée au berceau.

La fixation de la bride au berceau est indépendante de la fixation du corps de sorte que les parties de la bride et du berceau concernées par cette fixation sont standardisées. Il n'est donc plus nécessaire d'effectuer l'usinage précité des deux demi-portées. La bride et le berceau peuvent chacun être usinés lors de leur fabrication propre et les brides peuvent être remplacées ou permutées à volonté.

On diminue ainsi très sensiblement le stock des pièces de rechange nécessaires : en cas de rupture de la bride lors de l'utilisation de l'arme, on peut librement remplacer l'ensemble bride-corps par l'un quelconque des ensemble bride-corps du même type disponibles dans le stock (ou encore changer la bride seule si le mode de fixation du corps à la bride le permet).

Par ailleurs, l'usinage de la bride pour préparer la fixation du corps à la bride peut être effectué lors de la fabrication de la bride et ne pose pas de difficulté. La fixation du corps à la bride peut être effectué juste après la fabrication de la bride et avant montage sur le berceau.

La fixation rigide du corps au berceau est donc assurée mais l'usinage et le montage des différentes pièces est facilité et le stock des pièces de rechange est réduit.

Selon une version avantageuse de l'invention, le corps étant partiellement tubulaire, la bride comprend une partie tubulaire adaptée à être enfilée axialement sur le corps en vue de fixer la bride au corps. Ces parties tubulaires peuvent par exemple être cylindriques.

Bien entendu, on peut alors prévoir un ajustement serré de la bride sur le corps. Un épaulement du corps et un ou plusieurs cordons de soudure permettent alors de fixer facilement le corps rigidement à la bride.

Selon une autre version avantageuse de l'invention, la bride est d'un seul tenant avec le corps.

Dans ce cas, la pièce assurant les fonctions de la bride et du corps peut par exemple être réalisée à partir d'un seul ébauché de fonderie.

Selon une version préférée de l'invention, les premières surfaces sont agencées pour coopérer mutuellement afin d'interdire la translation de la bride par rapport au berceau suivant une direction orthogonale à l'axe du berceau et à la direction radiale à cet axe.

Dans le cas notamment où l'on fixe la bride au berceau par des liaisons vis-écrou radiales à l'axe du berceau, cette version permet d'éviter que ces liaisons ne supportent la transmission d'efforts suivant la direction précitée entre la bride et le berceau. On allonge ainsi très sensiblement la durée de vie de ces liaisons et de l'ensemble de la bride.

Selon une autre version préférée de l'invention le berceau est agencé de sorte que au moins certaines des premières surfaces portées par le berceau sont sensiblement en regard les unes des autres lorsque la bride n'est pas fixée au berceau.

Selon une autre version préférée de l'invention, les deuxièmes surfaces de la bride et du berceau sont agencées pour -coopérer mutuellement afin d'interdire la translation de la bride par rapport au berceau suivant une direction parallèle à l'axe du berceau .

Selon une autre version préférée de l'invention, le berceau est agencé de sorte qu'au moins certaines des deuxièmes surfaces portées par le berceau sont sensiblement en regard les unes des autres lorsque la bride n'est pas fixée au berceau.

Selon une autre version préférée de l'invention, lesdites premières surfaces et/ou lesdites deuxièmes surfaces sont agencées pour coopérer mutuellement afin d'interdire la rotation de la bride par rapport au berceau autour d'un axe parallèle à la direction radiale à l'axe du berceau.

Selon une autre version préférée de l'invention, les troisièmes surfaces de la bride et du berceau sont agencées pour coopérer mutuellement afin d'interdire la translation de la bride par rapport au berceau suivant une direction radiale à l'axe du berceau.

Selon une autre version préférée de l'invention, lesdites troisièmes surfaces sont agencées pour coopérer mutuellement afin d'interdire la rotation de la bride par rapport au berceau autour d'un axe parallèle à l'axe du berceau et/ou autour d'un axe orthogonal à la direction radiale et à l'axe du berceau.

Selon une autre version préférée de l'invention, le berceau comprend au moins des première et deuxième portions, ces portions portant chacune au moins une desdites première, deuxième et troisième surfaces, le berceau étant agencé pour recevoir la bride entre les première et deuxième portions de sorte que celles-ci sont situées de part et d'autre de l'axe du corps.

Selon une autre version préférée de l'invention, le berceau comprend au moins deux premières et deuxièmes portions respectivement sensiblement alignées parallèlement à l'axe du berceau, la bride comprenant au moins une troisième et/ou une quatrième portion, le dispositif étant agencé de sorte que la bride est fixée au berceau avec la troisième et/ou quatrième portion entre les premières et/ou deuxièmes portions .

Selon une autre version préférée de l'invention, les quatre portions du berceau forment un rectangle, les troisième et quatrième portions de la bride occupant des positions symétriques de part et d'autre de l'axe de la bride.

Selon une autre version préférée de l'invention, les premiers moyens de fixation comprennent des liaisons vis-écrou, lesdites liaisons vis-écrou comprenant des taraudages des troisièmes surfaces.

Selon une autre version préférée de l'invention, le berceau présentant extérieurement au moins quatre échancrures longitudinales parallèles à son axe, et les premiers moyens de fixation sont agencés de sorte que le corps de lien élastique se trouve sensiblement dans l'une de ces échancrures, un corps de lien élastique étant disposé dans chaque échancrure.

D'autres caractéristiques et avantages de l'invention apparaîtront encore dans la description qui va suivre d'un mode préféré de réalisation. Aux dessins annexés donnés à titre d'exemple non-limitatifs :
- la figure 1 est une vue en perspective d'une partie d'une arme comprenant un mode de réalisation du dispositif selon l'invention,
- la figure 2 est une vue en perspective montrant le berceau et la bride fixée au corps avant leur assemblage comme sur la figure 1,
- la figure 3 est une vue en perspective de la face inférieure de l'ensemble bride-corps de la figure 2,
- la figure 4 est une vue en perspective de la bride des figures précédentes, et
- la figure 5 est une vue en perspective du corps des figures précédentes.

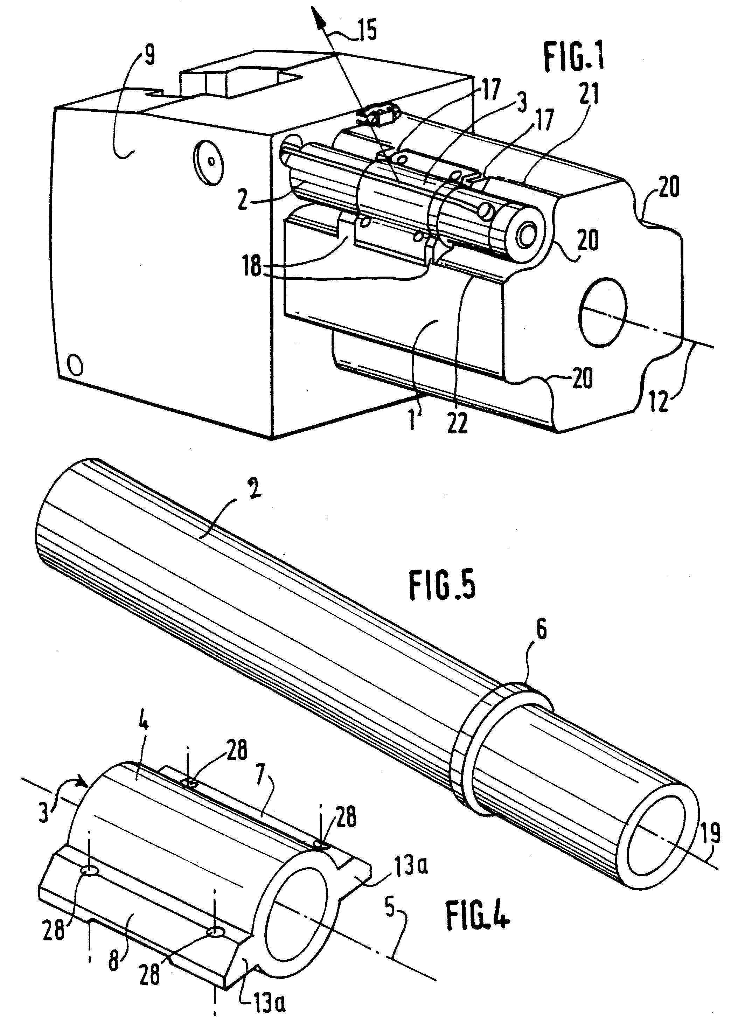

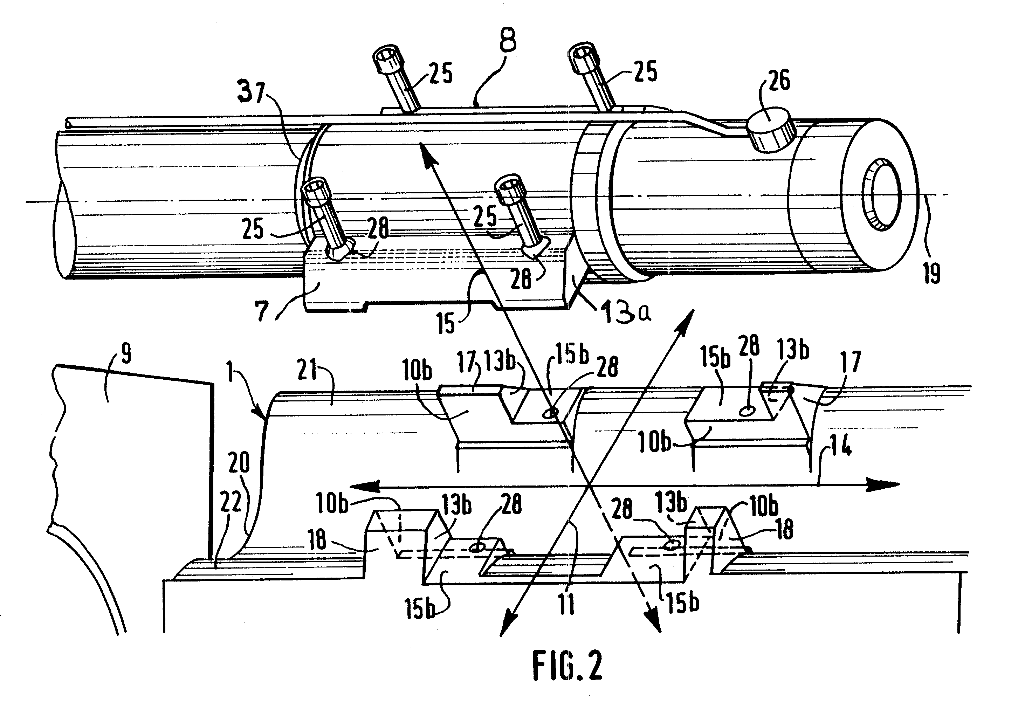

En référence aux figures 1 et 2, le mode de réalisation du dispositif selon l'invention est une partie d'arme d'artillerie dont les autres parties sont par ailleurs classiques et ne seront pas décrites en détail.

Le dispositif comprend un berceau 1, un corps 2 de lien élastique, qui est ici un frein, et une bride 3 pour la fixation du corps 2 au berceau 1. L'arme comprend un manchon de culasse 9 auquel est fixée la tige non représentée du corps 2. Comme il est bien connu, cette tige coulisse dans le corps 2.

Le dispositif comprend des premiers moyens de fixation rigide de la bride 3 au berceau 1 qui seront détaillés plus loin.

Selon l'invention, le dispositif comprend en outre des deuxièmes moyens de fixation rigide du corps 2 à la bride 3 seule.

Dans le présent exemple et en référence notamment à la figure 5, le corps 2 est un corps de frein partiellement tubulaire, et ici cylindrique. En référence à la figure 4 notamment, les deuxièmes moyens comprennent une partie tubulaire 4 d'axe 5 de la bride 3 adaptée à être enfilée axialement sur le corps 2 en vue de fixer la bride 3 au corps 2. Le diamètre intérieur de la partie 4 de la bride et le diamètre extérieur du corps 2 sont prévus pour réaliser un ajustement serré de la bride sur le corps.

Les deuxièmes moyens de fixation comprennent en outre ici un épaulement annulaire 6 du corps 2 interdisant dans un sens la translation axiale du corps dans la bride une fois celle-ci enfilée sur le corps. En référence à la figure 2, les deuxièmes moyens de fixation comprennent encore au moins un cordon de soudure 37 reliant la bride 3 au corps 2, ce cordon permettant de bloquer la translation axiale du corps dans la bride dans le sens opposé au sens précité ; avantageusement, le cordon de soudure 37 peut-être remplacé par un système à vis et écrou (non représenté).

La bride 3 comprend par ailleurs deux prolongement latéraux 7, 8 symétriques par rapport à l'axe 5 de la bride et s'étendant sur la longueur de la partie tubulaire 4.

Dans un mode de réalisation alternatif non représenté, la bride 3 est d'un seul tenant avec le corps 2. La pièce assurant les fonctions du corps et de la bride est alors par exemple réalisée à partir d'un ébauché de fonderie ou par forgeage.

Si la bride et le corps constituent une pièce d'un seul tenant, les deuxièmes moyens de fixation de la bride au corps font partie intégrante de cette pièce.

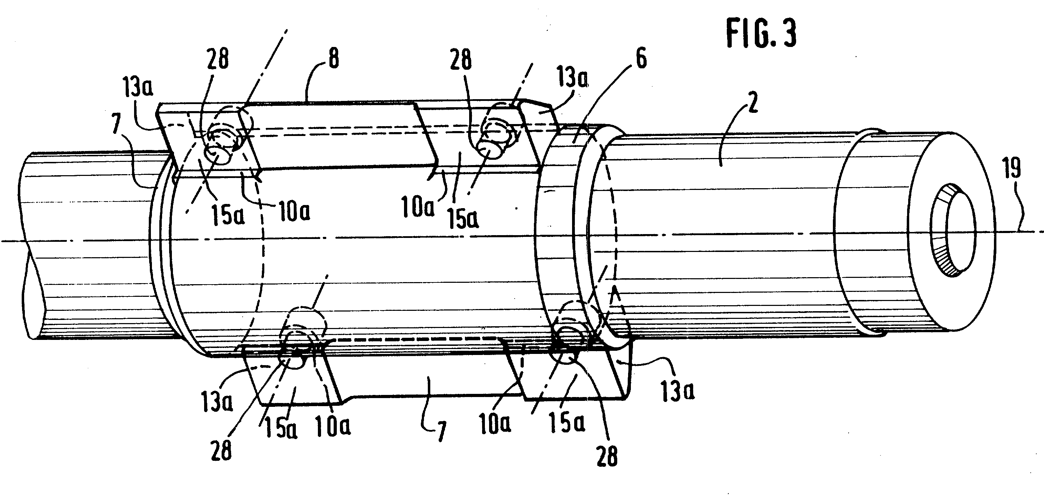

En référence aux figures 2 et 3, les premiers moyens de fixation de la bride au berceau comprennent des premières surfaces 10a et 10b respectivement de la bride 3 et du berceau 1. Ces surfaces 10a, 10b sont agencées pour coopérer mutuellement afin d'interdire la translation de la bride 3 par rapport au berceau 1 suivant une direction 11 qui est orthogonale à l'axe 12 du berceau et à la direction 15 radiale à cet axe.

Comme on le voit sur la figure 2, le berceau 1 est agencé de sorte que les premières surfaces 10b portées par le berceau 1 sont sensiblement en regard les unes des autres lorsque la bride 3 n'est pas fixée au berceau 1. Dans le présent exemple, les surfaces 10b sont orthogonales à la direction 11.

Les premiers moyens comprennent également des deuxièmes surfaces 13a, 13b respectivement de la bride 3 et du berceau 1 agencées pour coopérer mutuellement afin d'interdire la translation de la bride 3 par rapport au berceau 1 suivant une direction 14 parallèle à l'axe 12 du berceau 1.

Le berceau 1 est agencé de sorte que les deuxièmes surfaces 13b portées par le berceau 1 sont sensiblement en regard les unes des autres lorsque la bride 3 n'est pas fixée au berceau 1. Dans le présent exemple, les surfaces 13b sont orthogonales à la direction 14.

Ici, les premières surfaces 10a, 10b et les deuxièmes surfaces 13a, 13b sont également agencées pour coopérer mutuellement afin d'interdire la rotation de la bride 3 par rapport au berceau 1 autour d'un axe parallèle à la direction 15 radiale à l'axe 12 du berceau 1.

Les premiers moyens comprennent encore des troisièmes surfaces 15a, 15b respectivement de la bride 3 et du berceau 1 agencées pour coopérer mutuellement afin d'interdire la translation de la bride 3 par rapport au berceau 1 suivant la direction 15 radiale à l'axe 12 du berceau 1.

Les troisièmes surfaces 15a, 15b sont également agencées pour coopérer mutuellement afin d'interdire la rotation de la bride 3 par rapport au berceau 1 autour d'un axe parallèle à l'axe 12 du berceau 1, et également autour d'un axe parallèle à la direction 11 à savoir orthogonal à la direction radiale 15 et à l'axe 12 du berceau 1.

Dans le présent mode réalisation, le berceau 1 comprend deux premières 17 et deux deuxièmes 18 portions respectivement sensiblement alignées parallèlement à l'axe 12 du berceau 1. Ces portions 17, 18 portent chacune une première 10b, deuxième 13b et troisième 15b surfaces. Le berceau 1 est agencé pour recevoir la bride 3 entre les premières et deuxièmes portions 17, 18 de sorte que celles-ci sont respectivement situées de part et d'autre de l'axe 19 du corps 2 lorsque le corps est monté sur le berceau.

Les quatres portions 17 et 18 du berceau forment un rectangle.

En référence à la figure 1, le berceau 1 présente extérieurement des échancrures longitudinales 20 parallèles à son axe 12 qui donnent au berceau un profil en croix. Les quatres portions 17, 18 se trouvent sur les bords d'une de ces échancrures 20, les portions 17 sur un bord 21 et les portions 18 sur le bord 22 opposé. Le corps 2 se trouve sensiblement dans l'une de ces échancrures 20 lorsqu'il est monté sur le berceau.

Les premières surfaces 10b des premières portions 17 sont coplanaires, de même que celles des deuxièmes portions 18. IL en est de même pour les premières surfaces 10a de la bride se trouvant sur un même prolongement 7, 8.

Les deuxièmes surfaces 13b des portions 17, 18 placées en regard l'une de l'autre de part et d'autre de l'échancrure 20 sont également coplanaires. Il en est de même pour les deuxièmes surfaces 13a correspondantes de la bride 3, c'est-à-dire les surfaces 13a se trouvant à chaque extrémité axiale de la bride sur les prolongements 7, 8.

Les troisièmes surfaces 15b des quatres portions 17, 18 sont toutes coplanaires, de même que les troisièmes surfaces 15a de la bride.

Ces différentes coplanéités permettent d'usiner plusieurs des surfaces parallèles des catégories précitées avec un même passage d'outil.

Comme on l'a vu plus haut, la bride 3 comprend des troisième et quatrième portions qui sont respectivement les prolongements 7 et 8. Le dispositif est agencé de sorte que la bride 3 est fixée au berceau 1 avec les troisième 7 et quatrième 8 portions de la bride respectivement entre les premières 17 et deuxièmes 18 portions du berceau. En position fixée du corps 2, les portions 17 et 7 sont alignées, de même que les portions 18 et 8.

La symétrie de la bride 3 autour de son axe 5 entraîne que son centre de gravité se trouve sur l'axe 19 du corps une fois celui-ci fixé à la bride. Dans d'autres modes de réalisation, même si la forme de la bride n'est pas symétrique par rapport à son axe, il est avantageux de faire en sorte que le centre de gravité de la bride se trouve sur l'axe du corps une fois celui-ci fixé à la bride pour éviter de générer un balourd qui pourrait gêner une phase de tournage.

Les premiers moyens de fixation comprennent également quatres liaisons vis-écrou. Celles-ci comprennent des vis 25 et des taraudages 28 adaptés des troisièmes surfaces 15b, ces taraudages traversant l'épaisseur des prolongements 7, 8 de la bride 3 et s'enfonçant partiellement dans le berceau 1.

Les troisième surfaces 15a et 15b sont disposées de sorte que l'axe 19 du corps 2 une fois monté se trouve dans le plan commun de ces surfaces en vue d'éviter toute transmission de contrainte par les liaisons vis-écrou.

Le corps 2 présente un trou de purge 26 sur sa génératrice opposée à l'axe 12 du berceau en position de fixation du corps 2.

La fabrication et le montage du dispositif selon l'invention sont sommairement les suivants.

Sur le berceau 1, les quatres portions 17, 18 sont usinées par fraisage. Par ailleurs le corps 2 et la bride 3 sont usinés séparément. Sur la bride, les premières surfaces 10a sont usinées par tournage alors que les deuxièmes 13a et troisièmes 15a surfaces sont usinées par fraisage à l'aide d'un train de fraises.

Les pièces, notamment bride et berceau, sont usinées indépendamment pour obtenir les dimensions standard de chaque type de pièce. Sur un berceau portant plusieurs liens élastiques, les portions 17, 18 relatives à chaque corps sont usinées à la suite les unes des autres.

On procède ensuite à l'assemblage du corps 2 et de la bride 3 qui est enfilée sur le corps 2 jusqu'à l'épaulement 6. La mise en place du cordon de soudure 37 vient achever de fixer rigidement le corps 2 à la bride 3.

On fixe ensuite l'ensemble corps-bride sur le berceau 1 grâce aux liaisons vis-écrou.

Les quatres portions 17, 18 du berceau et les deux prolongements 7 et 8 de la bride coopèrent pour bloquer toute translation de la bride 3 par rapport au berceau 1 dans chacune des directions 11, 14 et 15 et toute rotation autour d'un axe parallèle à l'une de ces directions.

Les premières, deuxièmes et troisièmes surfaces 10a, 10b, 13a, 13b, 15a, 15b permettent aux portions 7, 8, 17, 18 d'encaisser les contraintes résultant de ces blocages et ménagent ainsi les liaisons vis-écrous.

Bien entendu, on pourra apporter à l'invention de nombreuses modifications et améliorations sans sortir du cadre de celle-ci.

Ainsi, on pourra imaginer différentes configurations de la bride et du berceau présentant un nombre variable de portions et diverses dispositions des portions et des surfaces.

## Revendications

1. Dispositif de fixation d'un lien élastique d'une artillerie comprenant notamment un berceau (1), un corps (2) de lien élastique et une bride (3) pour la fixation dudit corps au berceau, caractérisé en ce que le corps (2) présente une partie partiellement cylindrique adaptée à être enfilée axialement dans une partie tubulaire (4) de la bride (3), et en ce qu'il est constitué de premiers moyens (7, 8, 17, 18, 25, 28) de fixation de la bride sur le berceau (1) comprenant des premières (10a, 10b), deuxièmes (13a, 13b) et troisièmes (15a, 15b) surfaces de la bride et du berceau destinés à interdire toute translation de la bride (3) par rapport au berceau (1) suivant trois directions orthogonales entre elles et par rapport à l'axe (12) du berceau, et de deuxièmes moyens (6, 37) de fixation rigide du corps (2) sur la bride (3).

2. Dispositif selon la revendication 1, caractérisé en ce que les deuxièmes moyens de fixation sont constitués d'un épaulement annulaire (6) du corps (2) et d'un cordon de soudure (37) de la bride (3) sur le corps (2) ou un système à vis et écrou.

3. Dispositif selon la revendication 1 ou 2, caractérisé en ce que les premières surfaces (10a, 10b) sont agencées pour coopérer mutuellement afin d'interdire la translation de la bride par rapport au berceau (1) suivant une direction (11) orthogonale à l'axe (12) du berceau (1) et à la direction radiale (15) à cet axe.

4. Dispositif selon la revendication 3, caractérisé en ce que le berceau (1) est agencé de sorte qu'au moins certaines des premières surfaces (10b) portées par le berceau (1) sont sensiblement en regard les unes des autres lorsque la bride (3) n'est pas fixée au berceau (1).

5. Dispositif selon l'une quelconque des revendications 1 à 4, caractérisé en ce que les deuxièmes surfaces (13a, 13b) de la bridé (3) et du berceau (1) sont agencées pour coopérer mutuellement afin d'interdire la translation de la bride par rapport au berceau suivant une direction (14) parallèle à l'axe (12) du berceau (1).

6. Dispositif selon la revendication 5, caractérisé en ce que le berceau (1) est agencé de sorte qu'au moins certaines des deuxièmes surfaces (13b) portées par le berceau sont sensiblement en regard les unes des autres lorsque la bride (3) n'est pas fixée au berceau.

7. Dispositif selon l'une quelconque des revendication 1 à 6, caractérisé en ce que lesdites premières surfaces (10a, 10b) et/ou lesdites deuxièmes surfaces (13a, 13b) sont agencées pour coopérer mutuellement afin d'interdire la rotation de la bride (3) par rapport au berceau (1) autour d'un axe parallèle à la direction (15) radiale à l'axe (12) du berceau.

8. Dispositif selon l'une quelconque des revendications 1 à 7, caractérisé en ce que les troisièmes surfaces (15a, 15b) de la bride (3) et du berceau (1) sont agencées pour coopérer mutuellement afin d'interdire la translation de la bride par rapport au berceau suivant une direction (15) radiale à l'axe (12) du berceau.

9. Dispositif selon la revendication 8, caractérisé en ce que lesdites troisièmes surfaces (15a, 15b) sont agencées pour coopérer mutuellement afin d'interdire la rotation de la bride (3) par rapport au berceau (1) autour d'un axe parallèle à l'axe (12) du berceau et/ou autour d'un axe orthogonal à la direction radiale (15) et à l'axe (12) du berceau (1).

10. Dispositif selon la revendication 8 ou 9, caractérisé en ce que le berceau (1) comprend au moins des première et deuxième portions (17, 18), ces portions portant chacune au moins une desdites première, deuxième et troisième surfaces (10b, 13b, 15b), le berceau étant agencé pour recevoir la bride (3) entre les première et deuxième portions (17, 18) de sorte que celles-ci sont situées de part et d'autre de l'axe (19) du corps (2).

11. Dispositif selon la revendication 10, caractérisé en ce que le berceau (1) comprend au moins deux premières et deuxièmes portions (17, 18) respectivement sensiblement alignées parallèlement à l'axe (12) du berceau, la bride (3) comprenant au moins une troisième et/ou une quatrième portion (7, 8), le dispositif étant agencé de sorte que la bride (3) est fixée au berceau (1) avec la troisième et/ou quatrième portion (7, 8) entre les premières et/ou deuxièmes portions (17, 18).

12. Dispositif selon la revendication 11, caractérisé en ce que les quatre portions (17, 18) du berceau (1) forment un rectangle, les troisième et quatrième portions (7, 8) de la bride (3) occupant des positions symétriques de part et d'autre de l'axe (5) de la bride.

13. Dispositif selon l'une quelconque des revendications 1 à 12, caractérisé en ce que les premiers moyens de fixation comprennent des liaisons vis-écrou (25, _{28).}

14. Dispositif selon la revendication 13, caractérisé en ce que lesdites liaisons vis-écrou comprennent des taraudages (28) des troisièmes surfaces (15a, 15b).

15. Dispositif selon l'une quelconque des revendications précédentes, le berceau (1) présentant extérieurement au moins quatre échancrures (20) longitudinales parallèles à son axe (12), caractérisé en ce que les premiers moyens de fixation sont agencés de sorte que le corps (2) de lien élastique se trouve sensiblement dans l'une de ces échancrures (20).

16. Dispositif selon la revendication 15, caractérisé en ce qu'il comporte un corps (2) de lien élastique disposé dans chaque échancrure (20).

## Patentansprüche

1. Befestigungsvorrichtung einer elastischen Verbindung einer Artillerie vor allem mit einem Bock (1), einem Körper (2) zur elastischen Verbindung und einem Flansch (3) zur Befestigung des besagten Körpers am Bock, gekennzeichnet dadurch, daß der Körper (2) einen teilweise zylindrischen Teil aufweist, der axial auf einen röhrenförmigen Teil (4) des Flansches (3) aufgezogen werden kann, um dadurch, daß er erste Mitteln (7, 8, 17, 18, 25, 28) zur Befestigung des Flansches auf dem Bock (1) aufweist, mit den ersten (10a, 10b), zweiten (13a, 13b) und dritten (15a, 15b) Oberflächen des Flansches und des Bocks, die dazu bestimmt sind, jegliche Verschiebung des Flansches (3) in bezug auf den Bock (1) nach einer der drei zueinander orthogonalen Richtungen und in bezug auf die Achse (12) des Bocks zu verhindern, und zweiten Mitteln (6, 37) zur starren Befestigung des Körpers (2) auf dem Flansch (3).

2. Vorrichtung gemäß dem Anspruch 1, gekennzeichnet dadurch, daß die zweiten Mittel zur Befestigung aus einem ringförmigen Ansatz (6) des Körpers (2) und einer Schweißnaht (37) des Flansches (3) auf dem Körper (2) oder einem System mit Schrauben und Mutter bestehen.

3. Vorrichtung gemäß dem Anspruch 1 oder 2 gekennzeichnet dadurch, daß die ersten Oberflächen (10a, 10b) so eingerichtet sind, daß sie gegenseitig zusammenwirken, um eine Verschiebung des Flansches in bezug auf den Bock (1) gemäß einer Richtung (11) zu verhindern, die zur Achse (12) des Bocks (1) und zur radialen Richtung (15) zu dieser Achse orthogonal liegt.

4. Vorrichtung gemäß dem Anspruch 3 gekennzeichnet dadurch, daß der Bock (1) so eingerichtet ist, daß mindestens gewisse der ersten Oberflächen (10b) auf dem Bock (1) in etwa einander gegenüberliegen, wenn der Flansch (3) nicht auf dem Bock (1) befestigt ist.

5. Vorrichtung gemäß einem beliebigen der Ansprüche 1 bis 4, gekennzeichnet dadurch, daß die zweiten Oberflächen (13a, 13b) des Flansches (3) und des Bocks (1) so eingerichtet sind, daß sie zusammenwirken, um die Verschiebung des Flansches in bezug auf den Bock in eine Richtung (14) zu verhindern, die zur Achse (12) des Bocks (1) parallel liegt.

6. Vorrichtung gemäß dem Anspruch 5, gekennzeichnet dadurch, daß der Bock (1) so eingerichtet ist, daß mindestens gewisse der zweiten Oberflächen (13b) auf dem Bock in etwa einander gegenüberliegen, wenn der Flansch (3) nicht auf dem Bock befestigt ist.

7. Vorrichtung gemäß einem beliebigen der Ansprüche 1 bis 6, gekennzeichnet dadurch, daß besagte erste Oberflächen (10a, 10b) und/oder besagte zweite Oberflächen (13a, 13b) so eingerichtet sind, daß sie zusammenwirken, um die Drehung des Flansches (3) in bezug auf den Bock (1) um eine Achse zu verhindern, die zur radialen Richtung (15) der Achse (12) des Bocks parallel ist.

8. Vorrichtung gemäß einem beliebigen der Ansprüche 1 bis 7, gekennzeichnet dadurch, daß die dritten Oberflächen (15a, 15b) des Flansches (3) und des Bocks (1) so eingerichtet sind, um zusammenzuwirken, um die Verschiebung des Flansches in bezug auf den Bocks gemäß einer radialen Richtung (15) zur Achse (12) des Bocks zu verhindern.

9. Vorrichtung gemäß dem Anspruch 8, gekennzeichnet dadurch, daß besagte dritte Oberflächen (15a, 15b) so eingerichtet sind, daß sie zusammenwirken, um die Drehung des Flansches (3) in bezug auf den Bock (1) um eine Achse parallel zur Achse (12) des Bocks und/oder um eine Achse zu verhindern, die orthogonal zur radialen Richtung (15) und zur Achse (12) des Bocks (1) liegt.

10. Vorrichtung gemäß den Ansprüchen 8 und 9, gekennzeichnet dadurch, daß der Bock (1) mindestens einen ersten und zweiten Anteil (17, 18),umfaßt, wobei diese Anteile jeweils mindestens besagte erste, zweite und dritte Oberfläche (10b, 13b, 15b) tragen, wobei der Bock so eingerichtet ist, daß er den Flansch (3) zwischen dem ersten und zweitem Anteil (17, 18) so aufnimmt, daß diese zu beiden Seiten der Achse (19) des Körpers (2) zu liegen kommen.

11. Vorrichtung gemäß dem Anspruch 10, gekennzeichnet dadurch, daß der Bock (1) mindestens einen ersten und zweiten Abschnitt (17, 18) jeweils in etwa parallel zur Achse (12) des Bocks parallel gefluchtete Anteile aufweist, wobei der Flansch (3) mindestens einen dritten und/oder einen vierten Anteil (7, 8) umfaßt, wobei die Vorrichtung so eingerichtet ist, daß der Flansch (3) am Bock (1) mit dem dritten und/oder vierten Anteil (7, 8) zwischen dem ersten und/oder zweiten Anteil (17, 18) befestigt ist.

12. Vorrichtung gemäß dem Anspruch 11, gekennzeichnet dadurch, daß die vier Anteile (17, 18) des Bocks (1) ein Rechteck bilden, wobei der dritte und vierte Anteil (7, 8) des Flansches (3) symmetrische Positionen zu beiden Seiten der Achse (5) des Flansches einnehmen.

13. Vorrichtung gemäß einem, beliebigen der Ansprüche 1 bis 12, gekennzeichnet dadurch, daß die ersten Mittel zur Befestigung Verbindungen mit Schrauben und Muttern (25, 28) enthalten.

14. Vorrichtung gemäß dem Anspruch 13, gekennzeichnet dadurch, daß besagte Verbindungen mit Schrauben und Muttern Gewinde (28) der dritten Oberflächen (15a, 15b) enthalten.

15. Vorrichtung gemäß einem beliebigen der vorstehenden Ansprüche, wobei der Bock (1) außen mindestens vier Ausschnitte (20) längs parallel zu seiner Achse (12) aufweist, gekennzeichnet dadurch, daß die ersten Mittel zur Befestigung so eingerichtet sind, daß der Körper (2) zur elastischen Verbindung in etwa in einem dieser Ausschnitte (20) zu liegen kommt.

16. Vorrichtung gemäß dem Anspruch 15, gekennzeichnet dadurch, daß er einen Körper (2) zur elastischen Verbindung in jedem Ausschnitt (20) aufweist.

## Claims

1. A device for fastening a recoil mechanism onto a piece of artillery which notably comprises a cradle (1), a recoil mechanism body (2) and a flange (3) to fasten said body to the cradle, characterized in that the body (2) has a partly cylindrical part designed to be slipped axially into a tubular part (4) of the flange (3), and in that it is formed of first means (7, 8, 17, 18, 25, 28) to fasten the flange onto the cradle (1) comprising the first (10a, 10b), second (13a, 13b) and third (15a, 15b) surfaces of the flange and of the cradle intended to prevent the flange (3) from translating with respect to the cradle (1) in three orthogonal directions between them and with respect to the axis (12) of the cradle, and of second rigid means (6, 37) to fasten the body (2) onto the flange (3).

2. A device according to Claim 1, characterized in that the second fastening means are formed of a ring-shaped shoulder (6) of the body (2) and at least one welding bead (37) from the flange (3) to the body (2) or a screw and nut system.

3. A device according to Claims 1 or 2, characterized in that the first surfaces (10a, 10b) of the flange (3) and of the cradle (1) are arranged to work together so as to prevent the flange from translating with respect to the cradle (1) in a direction (11) which is orthogonal to the axis (12) of the cradle (1) and to the radial direction (15) to this axis.

4. A device according to Claim 3, characterized in that the cradle (1) is arranged such that at least some of the first surfaces (10b) carried by the cradle (1) lie roughly opposite each other when the flange (3) is not fastened to the cradle (1).

5. A device according to any one of Claims 1 to 4, characterized in that the second surfaces (13a, 13b) of the flange (3) and of the cradle (1) are arranged to work together in order to prevent the flange translating with respect to the cradle in a direction (14) parallel to the axis (12) of the cradle (1).

6. A device according to Claim 5, characterized in that the cradle (1) is arranged such that at least some of the second surfaces (13b) carried by the cradle lie roughly opposite each other when the flange (3) is not fastened to the cradle.

7. A device according to any one of Claims 1 to 6, characterized in that the said first surfaces (10a, 10b) and/or the said second surfaces (13a, 13b) are arranged so as to work together in order to prevent the flange (3) rotating with respect to the cradle (1) around an axis parallel to the direction (15) radial to the axis (12) of the cradle.

8. A device according to any one of Claims 1 to 7, characterized in that the third surfaces (15a, 15b) of the flange (3) and of the cradle (1) are arranged so as to work together in order to prevent the flange translating with respect to the cradle in a direction (15) radial to the axis (12) of the cradle.

9. A device according to Claim 8, characterized in that the said third surfaces (15a, 15b) are arranged so as to work together in order to prevent the flange (3) rotating with respect to the cradle (1) around an axis parallel to the axis (12) of the cradle and / or around an axis orthogonal to the radial direction (15) and to the axis (12) of the cradle (1).

10. A device according to Claims 8 or 9, characterized in that the cradle (1) comprises at least first and second portions (17, 18), these portions each bearing at least one of the said first, second and third surfaces (10b, 13b, 15b), the cradle being arranged so as to accommodate the flange (3) between the first and second portions (17, 18) such that these are located on either side of the axis (19) of the body (2).

11. A device according to Claim 10, characterized in that the cradle (1) comprises at least two first and/or second portions (17, 18) respectively aligned roughly in parallel to the axis (12) of the cradle, the flange (3) comprising at least a third and / or fourth portion (7, 8), the device being arranged such that the flange (3) is fastened to the cradle (1) with the third and / or fourth portion (7, 8) between the first and / or second portions (17, 18).

12. A device according to Claim 11, characterized in that the four portions of the cradle (1) form a rectangle, the third and fourth portions (7, 8) of the flange (3) occupying symmetrical positions on either side of the axis (5) of the flange.

13. A device according to any one of Claims 1 to 12, characterized in that the first fastening means comprise screw-nut connections (25, 28).

14. A device according to Claim 13, characterized in that the said screw-nut connections comprise tappings (28) on the third surfaces (15a, 15b).

15. A device according to any one of the above Claims, the cradle (1) having longitudinal cut-out parts (20) on its outside which are parallel to its axis (12), characterized in that the first fastening means are arranged such that the body (2) lies roughly in one of these cut-out parts (20).

16. Device according to Claim 15, characterized in that it comprises a body (2) of a recoil mechanism arranged in each cut-out part (20).
